# EUROPEAN PATENT APPLICATION

(11) **EP 4 668 356 A1**
(43) Date of publication of application: **24.12.2025**
(21) Application number: 23940514.5
(22) Date of filing: 21.12.2023
(51) Int. Cl.: H01M 4/136, H01M 4/04

(54) **POSITIVE ELECTRODE SHEET AND PREPARATION METHOD THEREFOR, SECONDARY BATTERY, AND ELECTRIC DEVICE**

(30) Priority: 08.06.2023 CN 202310677315
(71) Applicant: Contemporary Amperex Technology Co., Limited, Ningde, Fujian 352100 (CN)
(72) Inventor: JIANG, Zihao, Ningde, Fujian 352100 (CN); LIU, Jiang, Ningde, Fujian 352100 (CN); LIU, Xiaomei, Ningde, Fujian 352100 (CN); YAO, Bin, Ningde, Fujian 352100 (CN)
(74) Representative: Lorenz Seidler Gossel Part. mbB
(86) International application number: PCT/CN2023/140684
(87) International publication number: WO 2024/250640

(57) **Abstract**

The present application relates to a positive electrode sheet, a preparation method therefor, a secondary battery and an electric device, the positive electrode sheet includes a positive electrode current collector, at least a side of the positive electrode current collector is provided with a positive electrode active material layer, at least a side of the positive electrode active material layer is provided with a lithium compensation layer, the positive electrode active material layer includes lithium iron phosphate, and the lithium compensation layer includes a ternary material. At least a side of the positive electrode active material layer of the positive electrode sheet above is provided with the lithium compensation layer containing the ternary material, irreversible lithium compensation can be performed on a negative electrode sheet, and a loss amount of lithium ions in the positive electrode active material layer is effectively reduced during charge and discharge cycles, thereby delaying capacity attenuation of a secondary battery to prolong its cycle life.

## Description

### CROSS REFERENCE

The present application makes reference to Chinese Patent Application No. 202310677315.9 filed on April 27, 2023 and entitled "Positive Electrode Sheet, Preparation Method therefor, Secondary Battery, and Electric Device", which is incorporated herein by reference in its entirety.

### TECHNICAL FIELD

The present application relates to the field of secondary batteries, and in particular, to a positive electrode sheet, a preparation method therefor, a secondary battery, and an electric device.

### BACKGROUND

A lithium-ion battery is a secondary battery, and is widely used in the fields such as electric vehicles, portable electronic products, aerospace, etc. Commercialized positive electrode materials mainly include ternary positive electrode materials, lithium cobalt oxide, lithium iron phosphate, etc., wherein lithium iron phosphate has the advantages of a low cost, a low self-discharge rate, high safety, etc., but the cycle life of lithium iron phosphate still needs to be increased.

### SUMMARY

On this basis, the present application provides a positive electrode sheet, a preparation method therefor, a secondary battery and an electric device, to prolong the cycle life of the secondary battery containing the positive electrode sheet.

A first aspect of the present application provides a positive electrode sheet including a positive electrode current collector, at least a side of the positive electrode current collector is provided with a positive electrode active material layer, at least a side of the positive electrode active material layer is provided with a lithium compensation layer, the positive electrode active material layer includes lithium iron phosphate, and the lithium compensation layer includes a ternary material.

At least a side of the positive electrode active material layer in the positive electrode sheet above is provided with the lithium compensation layer, the positive electrode active material layer includes lithium iron phosphate, and the lithium compensation layer includes a ternary material, and by providing the lithium compensation layer containing the ternary material, a loss amount of lithium ions in the positive electrode active material layer is effectively reduced during charge and discharge cycles, thereby reducing earlier-stage capacity attenuation of a secondary battery to prolong its cycle life.

In some implementations, the lithium compensation layer is provided between the positive electrode current collector and the positive electrode active material layer. As a result, the earlier-stage capacity attenuation of the secondary battery is further reduced to prolong its cycle life. In addition, the binding force between the positive electrode active material layer and the lithium compensation layer is also increased, and further the binding force and conductivity of the positive electrode sheet are increased, reducing the direct current internal resistance of the secondary battery to increase its storage performance.

In some implementations, the ternary material includes one or more of a ternary material containing a nickel element, a cobalt element and a manganese element, and a ternary material containing a nickel element, a cobalt element and an aluminum element. As a result, the earlier-stage capacity attenuation of the secondary battery is further reduced to prolong its cycle life.

In some implementations, a percentage ratio of a mass of the ternary material to a mass of the lithium iron phosphate is 1% -10%. As a result, the earlier-stage capacity attenuation of the secondary battery is further reduced to prolong its cycle life. Optionally, the percentage ratio of the mass of the ternary material to the mass of the lithium iron phosphate is 3%-5%.

In some implementations, a single-side thickness H2 of the lithium compensation layer and a single-side thickness H1 of the positive active material layer satisfy the following condition: 5H2≤H1≤30H2. As a result, the earlier-stage capacity attenuation of the secondary battery is further reduced to prolong its cycle life. Optionally, the single-side thickness H2 of the lithium compensation layer and the single-side thickness H1 of the positive active material layer satisfy the following condition: 10H2≤H1≤15H2.

In some implementations, the compacted density of the lithium compensation layer is 3 g/m³-3.8 g/m³. As a result, the earlier-stage capacity attenuation of the secondary battery is further reduced to prolong its cycle life.

In some implementations, the ternary material has a weight fraction of 80%-97% based on the weight of the lithium compensation layer. As a result, the earlier-stage capacity attenuation of the secondary battery is further reduced to prolong its cycle life.

In some implementations, the ternary material has a weight fraction of 90%-95% based on the weight of the lithium compensation layer. As a result, the earlier-stage capacity attenuation of the secondary battery is further reduced to prolong its cycle life.

In some implementations, the lithium compensation layer further optionally includes a conductive agent and a binder. Thus, the binding force between the positive electrode active material layer and the lithium compensation layer is further increased, and further the binding force and conductivity of the positive electrode sheet are increased, reducing the direct current internal resistance of the secondary battery to increase its storage performance.

A second aspect of the present application provides a method for preparing the positive electrode sheet according to the first aspect of the present application, including the steps of forming the positive electrode active material layer and forming the lithium compensation layer.

The positive electrode sheet prepared by the preparation method above at least has the same advantage as the positive electrode sheet according to the first aspect of the present application, and in addition, the preparation method above has the advantages of simple operations and easy large-scale production.

A third aspect of the present application provides a secondary battery including the positive electrode sheet according to the first aspect of the present application or the positive electrode sheet prepared by the method according to the second aspect of the present application.

The secondary battery above at least has the same advantages as the positive electrode sheet according to the first aspect of the present application.

In some implementations, the secondary battery has an operating voltage of 2 V-3.8 V. As a result, the earlier-stage capacity attenuation of the secondary battery is further reduced to prolong its cycle life.

A fourth aspect of the present application provides an electric device including the secondary battery according to the third aspect of the present application.

The electric device above includes the secondary battery according to the third aspect of the present application, and thus has at least the same advantages as the secondary battery.

### DESCRIPTION OF DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work. In the drawings:
FIG. 1 is a schematic diagram of a secondary battery according to an implementation of the present application.
FIG. 2 is an exploded view of the secondary battery according to an implementation of the present application shown in FIG. 1.
FIG. 3 is a schematic diagram of a battery module according to an implementation of the present application.
FIG. 4 is a schematic diagram of a battery pack according to an implementation of the present application.
FIG. 5 is an exploded view of the battery pack according to an embodiment of the present application shown in FIG. 4.
FIG. 6 is a schematic diagram of an electric device using the secondary battery as a power supply according to an implementation of the present application.

### Description of reference signs:

1-Battery pack; 2-Upper case; 3-Lower case; 4-Battery module; 5-Secondary battery; 51-Housing; 52-Electrode assembly; 53-Cover plate; 6 Electric device

### DESCRIPTION OF EMBODIMENTS

To clarify the above objects, features and advantages of the present application, the specific implementation mode of the present application is described in detail below. In the following description, many specific details are set forth to fully understand the present application. However, the present application can be implemented in many other manners different from those described herein, those skilled in the art can make similar improvements without departing from the principle of the present application, and thus, the present application is not limited by the specific embodiments disclosed below.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In addition, the terms "first" and "second" are only used for descriptive purposes, and should not be construed as indicating or implying relative importance or implicitly indicating the number of technical features indicated. Thus, features defined by "first" and "second" may explicitly or implicitly indicate that at least one of the features are included. In the description of the present application, the meaning of "a plurality of" is at least two, such as two, three, etc., unless otherwise specifically defined.

Unless otherwise defined, all technical and scientific terms used herein have the same meaning as commonly understood by a person skilled in the art to which the present application belongs. The terms used in the specification of the present application herein are merely for the purpose of describing specific embodiments and are not intended to limit the present application.

Lithium iron phosphate is widely applied in the field of energy storage due to its advantages of a low cost, a low self-discharge rate, high safety and the like, and such application can be further promoted by prolonging cycle life of lithium iron phosphate. Generally, the reason for cycle life attenuation of a secondary battery containing lithium iron phosphate is loss of active lithium ions in a system. In view of this, the present application provides a positive electrode sheet, including a positive electrode current collector, at least a side of the positive electrode current collector is provided with a positive electrode active material layer, at least a side of the positive electrode active material layer is provided with a lithium compensation layer, the positive electrode active material layer includes lithium iron phosphate, and the lithium compensation layer includes a ternary material. At least a side of the positive electrode active material layer of the positive electrode sheet above is provided with the lithium compensation layer containing the ternary material, irreversible lithium compensation can be performed on a negative electrode sheet, and a loss amount of lithium ions in the positive electrode active material layer is effectively reduced during charge and discharge cycles, thereby delaying capacity attenuation of a secondary battery to prolong its cycle life.

### Positive electrode sheet

An implementation of the present application provides a positive electrode sheet, including a positive electrode current collector, at least a side of the positive electrode current collector is provided with a positive electrode active material layer, at least a side of the positive electrode active material layer is provided with a lithium compensation layer, the positive electrode active material layer includes lithium iron phosphate, and the lithium compensation layer includes a ternary material.

In the implementation above, since the ternary material has faster cycle attenuation than lithium iron phosphate, the lithium compensation layer can continuously perform irreversible lithium compensation on a negative electrode sheet during cycle charging, i.e., lithium ions in the lithium compensation layer are the lithium ions lost by an irreversible capacity and a solid electrolyte interface film (SEI film) formed in the negative electrode sheet during cycle charging, and thus, lithium ions released from a positive electrode active material layer during cycle charging can return to the positive electrode active material layer to the extent possible during cycle discharging, and the lithium ions of the lithium compensation layer embedded in the negative electrode sheet can play a slow-release effect during subsequent cycle discharging, to effectively reduce a loss amount of lithium ions of the positive electrode active material layer during charge and discharge cycles, thereby reducing the earlier-stage capacity attenuation of the secondary battery to prolong its cycle life. It should be noted that the lithium compensation layer may be provided between the positive electrode current collector and the positive electrode active material layer, or at a side of the positive electrode active material layer away from the positive electrode current collector, and of course, the lithium compensation layer may be also provided between the positive electrode current collector and the positive electrode active material layer and at a side of the positive electrode active material layer away from the positive electrode current collector. It can be understood that the positive electrode active material layer including lithium iron phosphate means that the positive electrode active material layer contains lithium iron phosphate, and the lithium compensation layer including a ternary material means that the lithium compensation layer contains the ternary material.

As an example, the positive current collector has two surfaces opposite in its own thickness direction, and the positive electrode active material lay and/or lithium compensation layer are provided on either one or both of the two opposite surfaces of the positive current collector.

In some implementations, the positive electrode active material layer optionally further includes a binder. As an example, the binder above may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As an example, the conductive agent above may include at least one of superconducting carbon, acetylene black, carbon black, ketjen black, carbon dots, carbon nanotubes, graphene, and carbon nanofibers.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the lithium compensation layer is provided between the positive electrode current collector and the positive electrode active material layer. In a conventional positive electrode sheet, a positive electrode active material layer is in contact with a positive electrode current collector. Compared with the conventional positive electrode sheet, the positive electrode sheet in this implementation has the lithium compensation layer provided between the positive electrode active material layer and positive current collector, on the one hand, reducing early-stage capacity attenuation of a secondary battery during cycles to prolong its cycle life, and on the other hand, increasing the bonding force between the positive electrode active material layer and the lithium compensation layer, and further increasing the bonding force and conductivity for the positive electrode sheet, so as to reduce the direct current internal resistance (DCR) of the secondary battery to increase the storage performance of the secondary battery.

In some implementations, the ternary material includes one or more of a ternary material containing a nickel element, a cobalt element and a manganese element, and a ternary material containing a nickel element, a cobalt element and an aluminum element.

The ternary material above containing a nickel element, a cobalt element and a manganese element includes, but not limited to, lithium nickel cobalt aluminium oxide which for example may be: at least one of LiNi₁ₗ₃Co_{1/3}M_{1/3}O₂(which may be referred to simply as NCM₃₃₃), LiNi_{0.5}Co_{0.2}Mn_{0.3}O₂(which may be referred to simply as NCM₅₂₃), LiNi_{0.5}Co_{0.25}Mn_{0.25}O₂(which may be referred to simply as NCM₂₁₁), LiNi_{0.6}Co_{0.2}Mn_{0.2}O₂(which may be referred to simply as NCM₆₂₂), LiNi_{0.8}Co_{0.1}Mn_{0.1}O₂(which may be referred to simply as NCM₈₁₁), modified compounds thereof or the like. The ternary material above containing a nickel element, a cobalt element and an aluminum element includes, but is not limited to, lithium nickel cobalt aluminum oxide, which may be, for example, at least one of LiNi_{0.80}Co_{0.15}Al_{0.05}O₂LiNi_{0.8}Co_{0.1}Al_{0.1}O₂LiNi_{0.6}Co_{0.2}Al_{0.2}O₂LiNi_{0.5}Co_{0.2}Al_{0.3}O₂, modified compounds thereof or the like.

In some embodiments, a percentage ratio of a mass of the ternary material to a mass of the lithium iron phosphate is 1% -10%. In the case where the percentage ratio of the mass of the ternary material to the mass of the lithium iron phosphate is too high, due to relatively rapid attenuation of the ternary material, a secondary battery has relatively severe capacity attenuation and reduced cycle life; and in the case where the percentage ratio of the mass of the ternary material to the mass of the lithium iron phosphate is too low, the lithium ions released from the positive electrode active material layer during cycle charging may not return to the positive electrode active material layer during cycle discharging, resulting in an insignificant lithium compensation effect of the lithium compensation layer. Therefore, when the percentage ratio of the mass of the ternary material to the mass of the lithium iron phosphate is within the above range, the loss amount of lithium ions in the positive electrode active material layer during charge and discharge cycles is further effectively reduced, thereby reducing the early-state capacity attenuation of the secondary battery to prolong its cycle life. It can be understood that the percentage ratio of the mass of the ternary material to the mass of the lithium iron phosphate includes, but is not limited to, 1%, 2%, 3%, 4%, 5%, 6%, 7%, 8%, 9%, and 10%. Optionally, the percentage ratio of the mass of the ternary material to the mass of the lithium iron phosphate is 3%-5%.

In the present application, the percentage ratio of the mass of the ternary material to the mass of the lithium iron phosphate refers to the mass of the ternary material/the mass of the lithium iron phosphate × 100%.

In some implementations, a single-side thickness H2 of the lithium compensation layer and a single-side thickness H1 of the positive active material layer satisfy the following condition: 5H2≤H1≤30H2. In the case where H1 is too thin relative to H2, due to relatively rapid attenuation of the ternary material, a secondary battery has relatively severe capacity attenuation and reduced cycle life; and in the case where H1 is too thick relative to H2, the lithium ions released from the positive electrode active material layer during cycle charging may not return to the positive electrode active material layer during cycle discharging, resulting in an insignificant lithium compensation effect of the lithium compensation layer. Therefore, H1 and H2 satisfying the above condition further reduce the earlier-stage capacity attenuation of the secondary battery to prolong its cycle life. Further, the single-side thickness H2 of the lithium compensation layer and the single-side thickness H1 of the positive active material layer satisfy the following condition: 10H2≤H1≤15H2. It can be understood that the single-side thickness of the lithium compensation layer refers to the thickness of the lithium compensation layer at a side of the positive electrode current collector, and the single-side thickness of the positive electrode active material layer refers to the thickness of the positive electrode active material layer at a side of the positive electrode current collector.

In some implementations, the compacted density of the lithium compensation layer is 3 g/m³-3.8 g/m³. The compaction density of the lithium compensation layer controlled to be within the above range can reduce the internal resistance of the secondary battery to reduce polarization loss, further prolonging the cycle life of the secondary battery. It can be understood that the compacted density of the lithium compensation layer includes, but is not limited to, 3 g/cm³, 3.1 g/cm³, 3.2 g/cm³, 3.3 g/cm³, 3.4 g/cm³, 3.5 g/cm³, 3.6 g/cm³, 3.7 g/cm³, and 3.8 g/cm³.

In the present application, the unit g/cm³ means gram/cubic centimeter.

In some implementations, the ternary material has a weight fraction of 80%-97% based on the weight of the lithium compensation layer. The weight fraction of the ternary material in the lithium compensation layer controlled to be within the above range further reduces the early-state capacity attenuation of the secondary battery during cycling to prolong its cycle life. It can be understood that the weight fraction of the ternary material includes, but is not limited to, 80%, 82%, 85%, 87%, 90%, 92%, 95%, and 97%. The weight fraction of the ternary material may optionally be 90%-95% based on the weight of the lithium compensation layer.

In some implementations, the lithium compensation layer further optionally includes a conductive agent and a binder. The conductive agent and binder contained in the lithium compensation layer above further increase the binding force between the positive electrode active material layer and the lithium compensation layer, and thus further increases the binding force and conductivity for the positive electrode sheet, reducing the direct current internal resistance (DCR) of the secondary battery to increase its storage performance. The mass ratio of the ternary material, conductive agent, and binder in the lithium compensation layer above may be, for example, 80: 8: 12, 85: 6: 9, 90: 4: 6 or 95: 2: 3, etc. As an example, the conductive agent may include at least one of superconducting carbon, acetylene black, carbon black, ketjen black, carbon dots, carbon nanotubes, graphene, and carbon nanofibers. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

Another implementation of the present application provides a method for preparing the positive electrode sheet above, including the steps of forming the positive electrode active material layer and forming the lithium compensation layer.

The positive electrode sheet prepared by the preparation method above at least has the same advantage as the positive electrode sheet above, and in addition, the above preparation method has the advantages of simple operations and easy large-scale production.

In some implementations, a positive electrode sheet can be prepared by the following manner: dispersing lithium iron phosphate, a conductive agent, a binder and any other components in a solvent (such as N-methylpyrrolidone) to form a lithium compensation slurry; coating the lithium compensation slurry on a positive electrode current collector to form a lithium compensation layer by drying; dispersing lithium iron phosphate, a conductive agent, a binder and any other components in a solvent (such as N-methylpyrrolidone) to form a positive electrode slurry; and coating the positive electrode slurry on a side of a lithium compensation layer away from the positive electrode current collector, followed by processes such as drying, cold pressing, etc. to obtain the positive electrode sheet.

**In** some other implementations, the positive electrode sheet may be prepared by the following manner: dispersing lithium iron phosphate, a conductive agent, a binder and any other components in a solvent (for example, N-methylpyrrolidone) to form a lithium compensation slurry; coating the lithium compensation slurry on a positive electrode current collector to form a lithium compensation layer by drying; dispersing lithium iron phosphate, a conductive agent, a binder and any other components in a solvent (for example, N-methylpyrrolidone) to form a positive electrode slurry; coating the positive electrode slurry on a side of a lithium compensation layer away from a positive electrode current collector to form a positive electrode active material layer by drying; and coating the lithium compensation slurry on a side of a positive electrode active material layer away from the positive electrode current collector, followed by processes such as drying, cold pressing, and the like to obtain the positive electrode sheet.

**In** some implementations, the positive electrode sheet may be prepared by the following manner: dispersing lithium iron phosphate, a conductive agent, a binder and any other components in a solvent (such as N-methylpyrrolidone) to form a positive electrode slurry; coating the positive electrode slurry on a positive electrode current collector to form a positive electrode active material layer by drying; dispersing lithium iron phosphate, a conductive agent, a binder and any other components in a solvent (such as N-methylpyrrolidone) to form a lithium compensation slurry; and coating the lithium compensation slurry on a side of a positive electrode active material layer far from a positive electrode current collector, followed by processes such as drying, cold pressing, and the like to obtain the positive electrode sheet.

Another implementation of the present application provides a secondary battery, including the positive electrode sheet above or the positive electrode sheet prepared by the preparation method above.

Generally, the secondary battery includes a positive electrode sheet, a negative electrode sheet, an electrolyte, and a separator. During charge and discharge of a battery, active ions are intercalated and deintercalated back and forth between the positive electrode sheet and the negative electrode sheet. The electrolyte functions to conduct ions between the positive electrode sheet and the negative electrode sheet. The separator is provided between the positive electrode sheet and the negative electrode sheet, to mainly prevent positive and negative electrodes from being shortcircuited and allow ions to pass through.

In some embodiments, the secondary battery has an operating voltage of 2 V-3.8 V. The operating voltage for the ternary material is usually 2.8 V-4.25 V, the highest operating voltage of lithium iron phosphate is 3.8 V, and because the ternary material and lithium iron phosphate have different operating voltage ranges, when both the ternary material and lithium iron phosphate are used, lithium iron phosphate is easily overcharged and structurally damaged, affecting cycle performance of a secondary battery containing lithium iron phosphate. In this implementation, the operating voltage of the secondary battery is set to 2 V-3.8 V, so that the ternary material operates in the voltage range of 2.8 V-3.8 V, which does not affect the structure of lithium iron phosphate in a positive electrode active material layer, and can also realize irreversible lithium compensation for a negative electrode sheet, thereby further reducing the early-stage capacity attenuation of the secondary battery to prolong its cycle life.

In the present application, unit V represents volt.

### Negative electrode sheet

The negative electrode sheet includes a negative electrode current collector and a negative electrode film layer provided on at least one surface of the negative electrode current collector, the negative electrode active material layer including a negative electrode active material.

As an example, the negative electrode current collector has two surfaces opposite in its own thickness direction, and the negative electrode active material layer is provided on either one or both of the two opposite surfaces of the negative electrode current collector.

In some implementations, the negative electrode current collector may employ a metal foil or composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some embodiments, the negative electrode active material layer optionally further includes a binder. The binder above may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer further optionally includes another auxiliary agent, for example, a thickening agent (e.g., sodium carboxymethyl cellulose (CMC-Na)).

In some embodiments, the negative electrode sheet may be prepared in the following manner: dispersing the components above for preparing the negative electrode sheet, for example, the negative electrode active material, the conductive agent, the binder, and any other component in a solvent (e.g., deionized water) to form a negative electrode paste; and coating the negative electrode paste on the negative electrode current collector, and performing procedures such as drying and cold pressing, to obtain the negative electrode sheet.

### Electrolyte

The electrolyte functions to conduct ions between the positive pole piece and the negative pole piece. The type of the electrolyte is not specifically limited in the present application, and may be selected according to a requirement. For example, the electrolyte may be liquid, gelled or all solid.

In some implementations, the electrolyte uses an electrolyte solution. The electrolyte solution above includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

### Separator

In some embodiments, the secondary battery further includes a separator. The type of the separator is not particularly limited in the present application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode sheet, the negative electrode sheet, and the separator may be manufactured into the electrode assembly through a winding process or a lamination process.

In some embodiments, the secondary battery may include an outer package. The outer package may be used to package the electrode assembly and the electrolyte.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

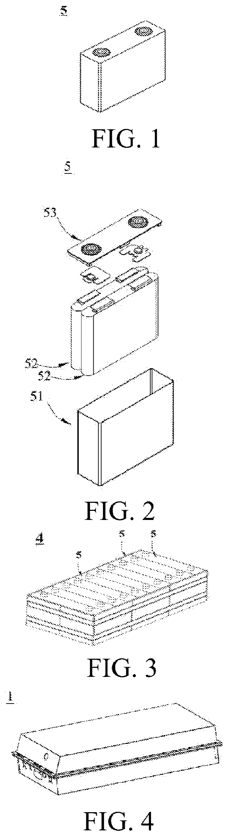

The shape of the secondary battery is not limited in this application, and may be a cylindrical shape, a square shape, or any other shape. For example, FIG. 1 shows a secondary battery 1 of a square structure as an example.

In some implementations, referring to FIG. 2, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the secondary battery 5, and the number may be selected by those skilled in the art according to specific practical requirements.

In some implementations, the secondary batteries may be assembled into a battery module, and there may be one or a plurality of secondary batteries included in the battery module, and the specific number may be selected by those skilled in the art according to the application and capacity of the battery module.

FIG. 3 shows a battery module 4 as an example. Referring to FIG. 3, in the battery module 4, a plurality of secondary batteries 5 may be arranged in series in the longitudinal direction of the battery module 4. Certainly, the secondary batteries may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some embodiments, the battery modules may be further assembled into a battery pack, and there may be one or a plurality of battery modules included in the battery pack, and the specific number may be selected by those skilled in the art according to the application and capacity of the battery pack.

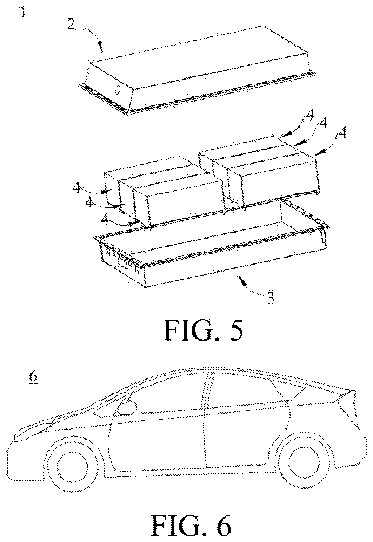

FIG. 4 and FIG. 5 show a battery pack 1 as an example. Referring to FIG. 4 and FIG. 5, a battery case and a plurality of battery modules 4 provided in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, this application further provides an electric device including at least one of the secondary battery, the battery module, or the battery pack provided in this application. The secondary battery, the battery module, or the battery pack may be used as a power source of the electric device and may also be used as an energy storage unit of the electric device. The electrical device may include, but is not limited thereto, a mobile apparatus, an electric vehicle, an electric train, a ship, a satellite, a power storage system, and the like. Here, the mobile apparatus may be, but is not limited thereto, a cell phone, a notebook computer, or the like; and the electric vehicle may be a pure electric vehicle, a hybrid electric vehicle, a plug-in hybrid electric vehicle, an electric bicycle, an electric scooter, an electric golf cart, an electric truck, or the like.

The secondary battery, the battery module, or the battery pack may be selected according to use requirements of the electric device.

FIG. 6 shows an electric apparatus 6 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### (1) Preparation of positive electrode sheet

(1.1) Ternary materials LiNi_{0.5}Mn_{0.3}Co_{0.2}O₂, polyvinylidene fluoride (PVDF) and conductive carbon black were mixed in a weight ratio of 90: 4: 6, solvent N-methylpyrrolidone (NMP) was added for uniform mixing by thorough stirring to obtain a lithium compensation slurry, then the slurry was coated on both surfaces of an aluminum foil, and then it was placed in an oven for drying at 120°C for 30 minutes (min), with a single-side thickness of the lithium compensation layer of 10 micrometers (µm).

(1.2) Lithium iron phosphate (_{LiFePO4}), polyvinylidene fluoride, and conductive carbon black were mixed in a weight ratio of 96: 2: 2, solvent N-methylpyrrolidone was added for uniform mixing by thorough stirring to obtain a positive electrode slurry, the slurry was coated on a lithium compensation layer, with a single-side thickness of a positive electrode active material layer of 150 µm, and a positive electrode sheet was prepared by steps such as drying, cold pressing, etc., the compacted density of the positive electrode active material layer being 2.65 g/cm³, and the compacted density of the lithium compensation layer being 3.5 g/cm³.

### (2) Preparation of negative electrode sheet

Artificial graphite, conductive carbon black and styrene-butadiene latex (SBR) were mixed in a weight ratio of 96: 2: 2, a solvent, deionized water, was added for uniform mixing by thorough stirring to obtain a negative electrode slurry, and the slurry was coated on both surfaces of a copper foil to prepare a negative electrode sheet by steps such as drying, cold pressing, etc., with the compaction density of the negative active material layer of 1.45 g/cm³.

### (3) Assembling of a lithium-ion battery

The positive electrode sheet and negative electrode sheet above, along with a matched PE separator with a thickness of 12 µm, are wound to form a lithium-ion battery cell. The battery cell was placed in a metal shell to form a lithium-ion battery, after drying, an electrolyte was injected, the electrolyte being composed of 1M LiPF6₆and a solvent of DMC: EC: EMC=1: 1: 1 Vol%, the unit Vol% representing the volume percentage, and after the electrolyte was fully fed, formation and capacity testing were performed.

### Examples 2-14

The examples are substantially the same as example1, except that components, a single-side thickness, and a compacted density of the lithium compensation layer in step (1.1), and components, a single-side thickness, and a compacted density of the positive electrode active material layer and an operating voltage of the secondary battery in step (1.2) were different from those in example 1.

### Comparative example 1

The example is substantially the same as example1, except that step (1.1) was not performed, and in step (1.2), a positive electrode slurry was coated on both surfaces of an aluminum foil.

### Comparative example 2

The example is substantially the same as example 1, except that a method for preparing a positive electrode sheet was different from that in example 1:
the positive electrode sheet in the comparative example was prepared by the following manner: ternary material LiNi_{0.5}Mn_{0.3}Co_{0.2}O₂, lithium iron phosphate, polyvinylidene fluoride, and conductive carbon black were mixed in a weight ratio of 5: 90: 2: 3, solvent N-methylpyrrolidone was added for uniform mixing by thorough stirring to obtain a positive electrode slurry, then it was coated on both surfaces of an aluminum foil, with a single-side thickness of a positive electrode active material layer of 160 µm, and a positive electrode sheet was prepared by steps such as drying, cold pressing, etc., the compacted density of the positive electrode active material layer being 2.65 g/cm³.

### Comparative example 3

The example is substantially the same as example1, except that step (1.1) was not performed, a positive electrode slurry was coated on both surfaces of an aluminum foil in step (1.2), and a lithium-ion battery had a operating voltage in a range of 2 V-4 V.

### Comparative example 4

The example is substantially the same as example 1, except that a method for preparing a positive electrode sheet was different from that in example 1:
the positive electrode sheet in the comparative example was prepared by the following manner: ternary material LiNi_{0.5}Mn_{0.3}Co_{0.2}O₂, lithium iron phosphate, polyvinylidene fluoride, and conductive carbon black were mixed in a weight ratio of 5: 90: 2: 3, solvent N-methylpyrrolidone was added for uniform mixing by thorough stirring to obtain a positive electrode slurry, then it was coated on both surfaces of an aluminum foil, with a single-side thickness of a positive electrode active material layer of 160 µm, a positive electrode sheet was prepared by steps such as drying, cold pressing, etc., the compacted density of the positive electrode active material layer being 2.65 g/cm³; and a lithium-ion battery had a operating voltage in a range of 2 V-4 V.

The product parameters of the lithium-ion batteries obtained in the examples and comparative examples are shown in table 1.

**Table 1: Product Parameters in Examples and Comparative Examples**

| Group | Lithium Compensation Layer | | | Positive Electrode Active Material Layer | | | Positive Electrode Sheet | | Operating Voltage (V) of Secondary Battery |
|---|---|---|---|---|---|---|---|---|---|
| | Component | Single-Side Thickness H2/µm | Compacted Density/(g/ cm³) | Component | Single-Side Thickness H1/µ m | Compacted Density/(g/ cm³) | Percentage Ratio of Mass of Ternary Material to Mass of Lithium Iron Phosphate/% | Layer Position | |
| Example 1 | LiNi_{0.5}Mn_{0.3}Co₀. ₂O₂: PVDF:Conducti ve Carbon Black=90: 4: 6 | 10 | 3.5 | LiFePO₄: PVDF:Conductive Carbon Black=96: 2: 2 | 150 | 2.65 | 5 | A positive electrode current collector, a lithium compensation layer, and a positive electrode active material layer are laminated in order | 2-3.8 |
| Example 2 | LiNi_{0.5}Mn_{0.3}Co₀. ₂O₂: PVDF:Conducti ve Carbon Black=90: 4: 6 | 10 | 3.5 | LiFePO₄: PVDF:conductive carbon black=96: 2: 2 | 120 | 2.65 | 6 | A positive electrode current collector, a lithium compensation layer, and a positive electrode active material layer are laminated in order | 2-3.8 |
| Example 3 | LiNi_{0.5}Mn_{0.3}Co₀. ₂O₂: PVDF:Conducti ve Carbon Black=90: 4: 6 | 10 | 3.5 | LiFePO₄: PVDF:Conductive Carbon Black=96: 2: 2 | 100 | 2.65 | 7.5 | A positive electrode current collector, a lithium compensation layer, and a positive electrode active material layer are laminated in order | 2-3.8 |
| Example 4 | LiNi_{0.5}Mn_{0.3}Co₀. ₂O₂: PVDF:Conducti ve Carbon Black=90: 4: 6 | 5 | 3.5 | LiFePO₄: PVDF:Conductive Carbon Black=96: 2: 2 | 150 | 2.65 | 2.5 | A positive electrode current collector, a lithium compensation layer, and a positive electrode active material layer are laminated in order | 2-3.8 |
| Example 5 | LiNi_{0.5}Mn_{0.3}Co₀. ₂O₂: PVDF:Conducti ve Carbon Black=90: 4: 6 | 20 | 3.5 | LiFePO₄: PVDF:Conductive Carbon Black=96: 2: 2 | 100 | 2.65 | 10 | A positive electrode current collector, a lithium compensation layer, and a positive electrode active material layer are laminated in order | 2-3.8 |
| Example 6 | LiNi_{0.5}Mn_{0.3}Co₀. ₂O₂: PVDF:Conducti ve Carbon Black=80: 8: 12 | 5 | 3.5 | LiFePO₄: PVDF:Conductive Carbon Black=96: 2: 2 | 150 | 2.65 | 1 | A positive electrode current collector, a lithium compensation layer, and a positive electrode active material layer are laminated in order | 2-3.8 |
| Example 7 | LiNi_{0.5}Mn_{0.3}Co₀. ₂O₂: PVDF:Conducti ve Carbon Black=85: 6: 9 | 25 | 3.5 | LiFePO₄: PVDF:Conductive Carbon Black=96: 2: 2 | 150 | 2.65 | 10 | A positive electrode current collector, a lithium compensation layer, and a positive electrode active material layer are laminated in order | 2-3.8 |
| Example 8 | LiNi_{0.5}Mn_{0.3}Co₀. ₂O₂: PVDF:Conducti ve Carbon Black=97: 1: 2 | 10 | 3.5 | LiFePO₄: PVDF:Conductive Carbon Black=96: 2: 2 | 150 | 2.65 | 6 | A positive electrode current collector, a lithium compensation layer, and a positive electrode active material layer are laminated in order | 2-3.8 |
| Example 9 | LiNi_{0.5}Mn_{0.3}Co₀. ₂O₂: PVDF:Conducti ve Carbon Black=90: 4: 6 | 10 | 3.5 | LiFePO₄: PVDF:Conductive Carbon Black=96: 2: 2 | 150 | 2.65 | 5 | A positive electrode current collector, a positive electrode active material layer, and a lithium compensation layer are stacked in order | 2-3.8 |
| Example 10 | LiNi_{0.5}Mn_{0.3}Co₀. ₂O₂: PVDF:Conducti ve Carbon Black=90: 4: 6 | 5 | 3.5 | LiFePO₄: PVDF:Conductive Carbon Black=96: 2: 2 | 150 | 2.65 | 5 | A positive electrode current collector, a first lithium compensation layer, a positive electrode active material layer, and a second lithium compensation layer are stacked in order | 2-3.8 |
| Example 11 | LiNi_{0.5}Mn_{0.3}Co₀. ₂O₂: PVDF:Conducti ve Carbon Black=90: 4: 6 | 10 | 3.5 | LiFePO₄: PVDF:Conductive Carbon Black=96: 2: 2 | 150 | 2.65 | 5 | A positive electrode current collector, a lithium compensation layer, and a positive electrode active material layer are laminated in order | 2-4 |
| Example 12 | LiNi_{0.5}Co_{0.2}Al_{0.3} O2: PVDF:Conducti ve Carbon Black=90: 4: 6 | 10 | 3.5 | LiFePO₄: PVDF:Conductive Carbon Black=96: 2: 2 | 150 | 2.65 | 5 | A positive electrode current collector, a lithium compensation layer, and a positive electrode active material layer are laminated in order | 2-3.8 |
| Example 13 | LiNi_{0.5}Mn_{0.3}Co₀. ₂O₂: PVDF:Conducti ve Carbon Black=90: 4: 6 | 12 | 3 | LiFePO₄: PVDF:Conductive Carbon Black=96: 2: 2 | 150 | 2.65 | 5 | A positive electrode current collector, a lithium compensation layer, and a positive electrode active material layer are laminated in order | 2-3.8 |
| Example 14 | LiNi_{0.5}Mn_{0.3}Co₀. ₂O₂: PVDF:Conducti ve Carbon Black=90: 4: 6 | 9 | 3.8 | LiFePO4: PVDF:Conductive Carbon Black= 96: 2: 2 | 150 | 2.65 | 5 | A positive electrode current collector, a lithium compensation layer, and a positive electrode active material layer are laminated in order | 2-3.8 |
| Comparative example 1 | No lithium compensation layer | | | LiFePO₄: PVDF:Conductive Carbon Black=96: 2: 2 | 150 | 2.65 | 0 | A positive electrode current collector, and a positive electrode active material layer are laminated in order | 2-3.8 |
| Comparative example 2 | No lithium compensation layer | | | LiNi_{0.5}Mn_{0.3}Co_{0.2} O₂:LiFePO₄: PVDF:Conductive Carbon Black=5: 90: 2: 3 | 160 | 2.65 | 5 | A positive electrode current collector, and a positive electrode active material layer are laminated in order | 2-3.8 |
| Comparative example 3 | No lithium compensation layer | | | LiFePO₄: PVDF:Conductive Carbon Black=96: 2: 2 | 150 | 2.65 | 0 | A positive electrode current collector, and a positive electrode active material layer are laminated in order | 2-4 |
| Comparative example 4 | No lithium compensation layer | | | LiNi_{0.5}Mn_{0.3}Co_{0.2} O₂:LiFePO₄: PVDF:Conductive Carbon Black=5: 90: 2: 3 | 160 | 2.65 | 5 | A positive electrode current collector, and a positive electrode active material layer are laminated in order | 2-4 |

### Performance tests:

### (1) Testing method of a binding force

An electrode sheet to be tested is taken, a sample with a width of 30 mm and a length of 100 mm-160 mm is cut by a knife and attached to a steel plate by a dedicated double-sided adhesive tape, with a test surface facing downward, then the sample is pressed for three times in a same direction by a roller, and a paper tape with the same width as the electrode sheet is inserted under the electrode sheet and fixed. The steel plate and paper tape are fixed to a tension machine by a clamp, the paper tape is pulled upward at a speed of 50 mm/min until displacement greater than 70 mm, and at this point, the reading of the tension machine is recorded as a bonding force between an active material layer or a lithium compensation layer and a current collector; and unit mm represents millimeter.

### (2) Testing method for direct-current internal resistance

At room temperature, a lithium-ion battery is charged at a rate of 1/3 C to an upper limit operating voltage (3.8 V or 4 V), i.e., 100% SOC, and then the lithium-ion battery is discharged to 50% SOC, and after standing for 5 min, discharged at a rate of 4 C for 10 s, to obtain the direct current internal resistance DCR of the lithium-ion battery at 50% SOC at room temperature.

### (3) Testing method for storage performance

At 25°C, a lithium-ion battery is placed in an incubator for storage for 365 d, a battery capacity is measured every 30 d, after the storage ends, the battery is subjected to charging at a constant current at a rate of 0.5 C to an upper limit operating voltage (3.8 V or 4 V), charging at a constant voltage to 0.05 C, discharging to 2.5 V at a current of 0.5 C, and discharging to 2.0 V at a current of 0.1 C, and the ratio of the capacity at this point to an initial capacity is recorded.

### (4) Testing method for cycling performance

A lithium compensation effect can be verified by a cycle testing for a lithium-ion battery, and the cycle testing condition is that a lithium-ion battery is subjected to, at 25°C, charging at a constant current at a rate of 0.5 C to an upper limit operating voltage (3.8 V or 4 V), charging at a constant voltage to 0.05 C, standing for 10 min, then discharging to 2.5 V at a current of 0.5 C, and then discharging to 2.0 V at a current of 0.1 C until the discharge capacity of the lithium-ion battery is attenuated to 80% of an initial capacity, and the number of cycles at this point is recorded.

**Table 2: Performance Parameters of Positive Electrode Sheets and Lithium-ion Batteries in Examples and Comparative Examples**

| Group | Binding Force Between Active Material Layer or Lithium Compensation Layer and Current Collector/(N/m) | Internal Resistance/mΩ | Storage Performance /% | Number of Cycles (80% of an initial capacity after attenuation) |
|---|---|---|---|---|
| Example 1 | 15.2 | 0.9 | 95.8 | 4500 |
| Example 2 | 15 | 0.92 | 95.6 | 4330 |
| Example 3 | 14.8 | 0.95 | 95.5 | 4250 |
| Example 4 | 14.5 | 0.95 | 95.5 | 4200 |
| Example 5 | 17 | 0.9 | 95 | 4050 |
| Example 6 | 15.8 | 0.88 | 95.6 | 4350 |
| Example 7 | 15.5 | 0.9 | 95 | 4400 |
| Example 8 | 14.5 | 0.95 | 95.3 | 4480 |
| Example 9 | 10 | 0.9 | 95.6 | 4400 |
| Example 10 | 15 | 0.9 | 95.8 | 4400 |
| Example 11 | 15.2 | 0.9 | 93 | 2800 |
| Example 12 | 15 | 0.93 | 95.5 | 4300 |
| Example 13 | 15.2 | 0.9 | 95.2 | 4300 |
| Example 14 | 14.5 | 0.9 | 95 | 4200 |
| Comparative example 1 | 10 | 1 | 95 | 3800 |
| Comparative example 2 | 10 | 1.05 | 95 | 4000 |
| Comparative example 3 | 10 | 1 | 92 | 1900 |
| Comparative example 4 | 10 | 1.05 | 92 | 2300 |

Table 1 and Table 2 are analyzed, and it can be seen from the comparison of Examples 1-10, Examples 12-14 and Comparative Examples 1-2 that secondary batteries prepared in Examples 1-10 have a significantly small direct current internal resistance and a relatively large number of cycles at 80% of an initial capacity after attenuation; and it can be seen from the comparison of Example 11 and Comparative Examples 3-4 that a secondary battery prepared in Example 11 has a significantly small direct current internal resistance and a relatively large number of cycles at 80% of an initial capacity after attenuation; and it indicates that Examples 1-14 with the lithium compensation layer provided at at least a side of the positive electrode active material layer prolongs the cycle life of the secondary batteries and reduce the direct current internal resistance of the secondary batteries.

It can be seen from Example 1, Examples 9-10 and Comparative Examples 1-2 that the lithium compensation layer provided between the positive electrode current collector and the positive electrode active material layer increases the bonding force between the positive electrode current collector and the positive electrode active material layer, and the current collector, and reduces the direct current internal resistance of the secondary batteries.

The technical features of the above-mentioned example may be combined, and all possible combinations of the technical features in the above-mentioned embodiments are not described for concise description, however, it should be regarded that the combinations of the technical features are with the range described in the present description as long as there is no inconsistency.

The above examples merely illustrate several embodiments of the present application, which are described specifically and detailedly, but are not to be construed as limiting the scope of the application patent. It should be noted that, for those skilled in the art, several variations and modifications may be made without departing from the concept of the present application, which are all within the protection scope of the present application. Therefore, the protection scope of the present application patent should be defined by the appended claims, and the description and the drawings may be used to interpret the claims.

## Claims

1. A positive electrode sheet, comprising a positive electrode current collector, at least a side of the positive electrode current collector being provided with a positive electrode active material layer, at least a side of the positive electrode active material layer being provided with a lithium compensation layer, the positive electrode active material layer comprising lithium iron phosphate, and the lithium compensation layer comprising a ternary material.

2. The positive electrode sheet according to claim 1, wherein the lithium compensation layer is provided between the positive electrode current collector and the positive electrode active material layer.

3. The positive electrode sheet according to any one of claims 1-2, wherein the ternary material comprises one or more of a ternary material containing a nickel element, a cobalt element and a manganese element, and a ternary material containing a nickel element, a cobalt element and an aluminum element.

4. The positive electrode sheet according to any one of claims 1-3, wherein a percentage ratio of a mass of the ternary material to a mass of the lithium iron phosphate is 1%-10%.

5. The positive electrode sheet according to any one of claims 1-4, wherein the percentage ratio of the mass of the ternary material to the mass of the lithium iron phosphate is 3% -5%.

6. The positive electrode sheet according to any one of claims 1-5, wherein a single-side thickness H2 of the lithium compensation layer and a single-side thickness H1 of the positive electrode active material layer satisfy the following condition: 5H2≤H1≤30H2.

7. The positive electrode sheet according to claim 6, wherein 10H2≤H1≤15H2.

8. The positive electrode sheet according to any one of claims 1-7, wherein a compacted density of the lithium compensation layer is 3 g/cm³-3.8 g/cm³.

9. The positive electrode sheet according to any one of claims 1-8, wherein the ternary material has a weight fraction of 80%-97% based on the weight of the lithium compensation layer.

10. The positive electrode sheet according to any one of claims 1-9, wherein the ternary material has a weight fraction of 90%-95% based on the weight of the lithium compensation layer.

11. The positive electrode sheet according to any one of claims 1-10, wherein the lithium compensation layer further comprises a conductive agent and a binder.

12. A method for preparing the positive electrode sheet according to any one of claims 1-11, comprising the step of forming the positive electrode active material layer and forming the lithium compensation layer.

13. A secondary battery, comprising the positive electrode sheet according to any one of claims 1-11 or the positive electrode sheet prepared by the preparation method according to claim 12.

14. The secondary battery according to claim 13, wherein the secondary battery has an operating voltage of 2 V-3.8 V.

15. An electric device, comprising the secondary battery according to any one of claims 13 to 14.
